# EUROPEAN PATENT SPECIFICATION

(11) **EP 3 610 721 B1**
(45) Date of publication and mention of the grant of the patent: **21.04.2021**
(21) Application number: 18727065.7
(22) Date of filing: 13.04.2018
(51) Int. Cl.: A01G 23/06

(54) **STUMP REMOVAL DEVICE**
EXTRAKTIONSGERÄT VON BAUMSTUMPF
DISPOSITIF D'EXTRACTION DE SOUCHE DE BOIS

(30) Priority: 13.04.2017 PT 2017110027
(43) Date of publication of application: 19.02.2020
(73) Proprietor: Fravizel - Equipamentos Metalomecânicos Lda., 2025-999 Alcanede (PT)
(72) Inventor: VICENTE FRAZÃO, Eliseu Manuel, 2025-999 Alcanede (PT)
(74) Representative: Pereira da Cruz, Joao
(86) International application number: PCT/PT2018/050013
(87) International publication number: WO 2018/190739

(56) References cited:
- DE-U1-202012 100 580
- DE-U1-202012 100 580
- ES-A1- 2 336 521
- ES-A1- 2 336 521
- JP-A- H07 237 205
- JP-A- H07 237 205
- PT-A- 103 603
- US-A- 6 076 572
- US-A- 6 076 572
- US-A1- 2008 282 585
- US-A1- 2008 282 585
- US-A1- 2015 107 137
- US-A1- 2015 107 137
- Fravizel SA: "FRAVIZEL_FORESTRY_2016", , 29 October 2016 (2016-10-29), XP054978515, Retrieved from the Internet: URL:https://www.youtube.com/watch?v=oi_t-6 5MLJA [retrieved on 2018-07-13]

## Description

### BRIEF INTRODUCTION TO THE INVENTION

Over recent years, the evolution and adaptation of new technologies in forestry exploitation has been considerable and has contributed to reduce costs, reduce environmental impacts and increase safety.

However, there is still room to innovate and allow reconciliation between productivity, to reduce environmental impacts and for competitiveness in the forestry industry.

The present invention refers to a device, an accessory of an excavating machine, which enables the stump to be extracted from the soil in a single action, and after finalizing the extraction, all that is needed is to move the machine over the trails and position it to begin another extraction.

The objective of the present invention is to develop a new solution in the stump extracting operation that enables improved adjustment to current environmental needs, with greater productivity and lesser intervention in the soils by leaving the roots and most of the aggregate in the ground.

### STATE OF THE ART

The search into the state of the art was designed to evaluate whether the technical characteristics claimed in the present invention has already been disclosed and/or commercialized by other inventors, turning up several patent documents, the following being of prominence PT103603, EP1639887, FR2924305 and DE3128467.

The Patent n°. PT103603B1, presented by the Applicant of the present invention and granted on August 8, 2008, which was also granted in Spain with the number ES2 336 521B1, refers to an accessory that enables the stump to be extracted and cut from the soil in a single operation, so that it can be subsequently reduced into small pieces. This equipment enables the utilization of this raw material for biomass burning or paste for paper. However, the utilization rate of the stumps can be improved because the content of aggregate is high, and from the environmental perspective, when the stump is pulled up the roots come out with it, disturbing the balance of the soils.

The aforementioned patent document n°. PT103603 refers to a device to adapt to earthmoving machines (diggers), comprising two pivoting parts, the bucket and the hatchet, supported by the hydraulics box. The hatchet is driven by a cylinder placed beneath the hydraulics box and is commanded by an independent circuit. The function of the bucket is to pull up, and is driven by the cylinder of the machine which moves the 'h'.

Since a product is extracted from the soil without any processing, it will inevitably be contaminated with aggregate (stones, sands and others). In addition to this difficulty is the fact that its irregular and voluminous shape (i.e. with roots) makes the transport process from the field to the factory (or to another first stage of the processing process thereof) inefficient, as there is a low ratio between weight and volume. Lastly, it is also important to consider that its atypical shape creates difficulties in the subsequent stump processing phase at the factory.

Patent document n°. EP1639887A1 comprises a device and a method for extracting stumps. Said device for extracting stumps comprises a coupling device for coupling the handling device to a work machine, a rotator for turning the handling device in relation to a work machine, means for gripping a stump, cutting means that are disposed at a distance from the gripping means, as well as power means for directing the operating power from outside to the gripping means and to the cutting means. In the method, a stump is gripped by a handling means and parts of the root that are meant to be removed from the stump are cut by means of a cutting blade in the handling device. Afterwards, the part of the stump held by the handling device is transferred to a stump transport device.

Patent document n°. FR2924305 refers to tool having a counter-cutting articulated jaw and a mobile cutting jaw which is formed by two rotary cutting blades rotatably assembled around a common shaft. The blades are propelled by a rotational displacement around the shaft to go from open position to a closed position. The blades are assembled independently, in rotational displacement, in relation to one another. The blades have drive units, that is, actuators, driving the blades by selective or simultaneous displacement to synchronised or unsynchronised displacement of the blades.

Patent document n°. DE3128467 refers to hydraulic grippers that are attached to the front loader linkage of a tractor and has lever-like jaws, tree stumps are to be gripped from beneath in the root region and pulled out of the earth and, beforehand and/or thereafter, split longitudinally by the cutting edges, which can be moved together. As gripper drive, use is made of hydraulic cylinders that are driven via a connection to the tractor hydraulics.

Patent document n.° US6076572 refers an apparatus that lifts, secures, splits and/or crushes tree stumps or other materials, particularly wooden or metal materials and other materials that may be present at an excavation site. The apparatus is characterized in part by a two pivot point design.

Patent document n.° JPH07237205 refers a crusher for large-size wood waste by which a log and a stump are crushed in a size not exceeding the prescribed dimension by rough crush without tearing the log and the stump.

In the state of the art, there are other patent applications for the forestry area, such as patent applications Nos. US2015107137, US2008282585 and DE202012100580.

None of the aforementioned patent documents PT103603, EP1639887, DE2924305, DE3128467, US6076572, JPH07237205, US2015107137, US2008282585 and DE202012100580 presents the technical characteristics described in the present invention as is the case, among others, of an outer structure, which includes a three cutter, an extractor in the inside and to which there is coupled a three-cutter axe, which is pivoting around a pin and which is moved by a hydraulic drive cylinder, which is turn is driven by means of an alternative hydraulic circuit of the machine.

The present invention refers to an accessory of an excavating machine for forestry use. After tree cutting, the stumps are normally extracted to clear the land for reforestation. These stumps have to be extracted so they can be optimized (more wood and less aggregate) and transported.

The conventional method consists of utilizing the excavation machines with a splitter which pulls out the stumps and their roots for subsequent sectioning into smaller pieces. This method has the drawback of stirring up the land a lot, pulling up the roots and the aggregate causing major environmental impact.

This new accessory described in the present invention enables the stump, namely the part of the trunk that is above the ground after the cut of the tree, to be extracted without stirring up the land and leaving the roots.

### BRIEF DESCRIPTION OF THE DRAWINGS

The description below is made with reference to the accompanying drawings which are presented solely as reference, having no limitative character, and wherein:
Figure 1 - is a side view of the stump extraction device;
Figure 2 - is a general perspective view of the stump extraction device; and
Figure 3 - is a perspective view of the stump extraction device in conjugation with a machine.

### List of reference numbers

- an outer structure (1);
- a three-cutter axe (2);
- a hydraulic drive cylinder (3);
- a left cutter (4);
- a right cutter (5);
- a base cutter (6);
- an upper left cutter (7);
- an upper right cutter (8);
- a rear cutter (9);
- a base (10) for the encasement and attachment of an arm of the machine (20);
- two large sides (11);
- a rear ring (12);
- an intermediate ring (13);
- an extractor (14);
- a left and right outer reinforcement (15);
- a pivot pin of the cylinder (16);
- a pin (17);
- two lower penetration beaks (18);
- pivot pin of the axe (19);
- arm of the machine (20);
- base of the machine (21);
- two pins or other means (22); and
- a rear reinforcement (23).

### DETAILED DESCRIPTION OF THE INVENTION

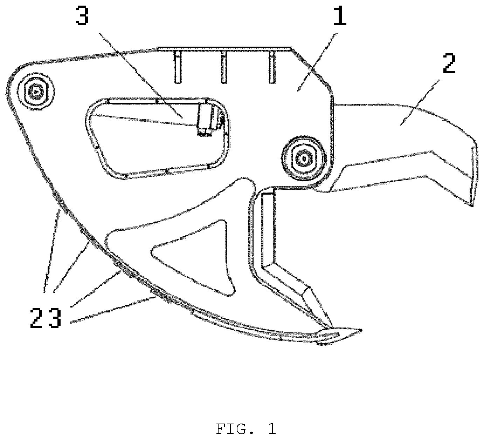

In Figure 1 is represented an outer structure (1), which includes a three cutter and an extractor, and a three-cutter axe (2).

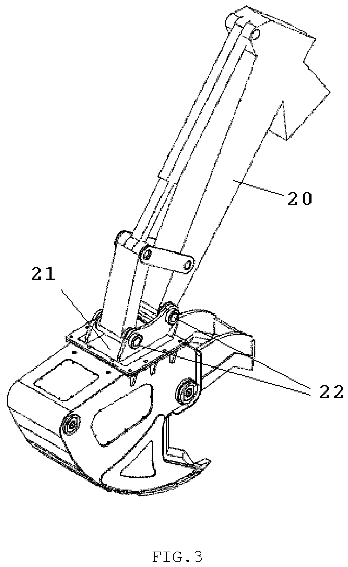

The present invention, represented in figure 3, refers to an accessory for assembly on earthmoving machines (20) which enables the stump to be extracted from the ground in one cut, leaving the roots and the aggregate in the soil. This said part may be coupled to any type of machine, and so is perfectly autonomous and adaptable.

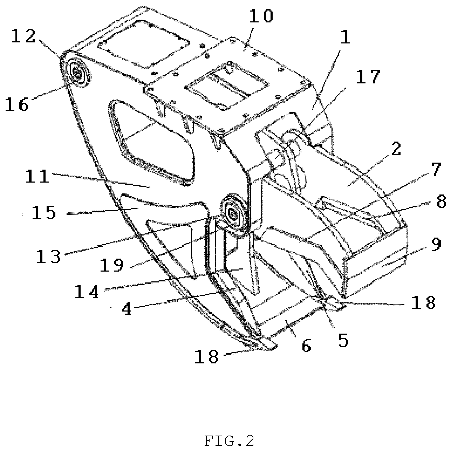

As can be seen in figure 2, the present invention presents an outer structure (1) which acts as support for the remaining components, three-cutter axe (2) and a hydraulic cylinder (3) or other cutting drive manner having a scissor effect against the outer structure (1).

This said scissor effect is achieved by the three-cutter axe (2) and by the components of the outer structure (1), concretely the left cutter (4), the right cutter (5) and the base cutter (6).

The present invention refers to an accessory for assembly on (20) earthmoving machines which enables the stump to be extracted stump from the ground in one cut, leaving the roots and the aggregate in the soil.

The present invention presents an outer structure (1) that acts as support to the remaining components, three-cutter axe (2) and a hydraulic cylinder (3) or other cutting means having a scissor effect against the outer structure (1) .

Figure 1 shows the stump extraction device, comprises:
- an outer structure (1);
- a three-cutter axe (2); and
- a hydraulic drive cylinder (3).

The said 3 components of the stump extraction device are respectively connected to each other.

The outer structure (1), represented in figure 2, comprises:
- a left cutter (4);
- a right cutter (5); and
- a base cutter (6).

The aforementioned components of the outer structure (1), concretely:
- a left cutter (4);
- a right cutter (5); and
- a base cutter (6)
are disposed in a U-shape, the base of which is the base cutter (6), and on which the left cutter (4) and the right cutter (5) are perpendicularly attached on each of the respective vertices.

Figure 2 shows a representation of the three-cutter axe (2) which comprises:
- an upper left cutter (7);
- an upper right cutter (8); and
- a rear cutter (9), with the cutters of the outer structure (1), so as to produce a cutting effect.

The components of the three-cutter axe (2), represented in figure 2 concretely:
- the upper left cutter (7);
- the upper right cutter (8); and
- the rear cutter (9),
are disposed in a U-shape, the base of which is the rear cutter (9), and on which the upper left cutter (7) and the upper right cutter (8) are perpendicularly attached on each of the respective vertices.

A three-cutter axe (2) pivots around a pivot pin (19) .

The outer structure (1) represented in figure 2 comprises:
- a base (10), located on top of the outer structure (1) and for the encasement and attachment of an arm of the machine (20);
- two large sides (11), respectively located on the left and right portion of the outer structure (1);
- a rear ring (12);
- an intermediate ring (13) for joining the outer structure (1) and the three-cutter axe (2);
- an extractor (14), located half-way inside the outer structure (1);
- a left and right outer reinforcement (15), respectively located on the left and right portion of the outer structure (1);
- a pivot pin of the cylinder (16), which is inserted into the rear ring (12);
- a pivot pin (19) of the three-cutter axe (2), which connects the cylinder (3) to the three-cutter axe;
- two replaceable lower penetration beaks (18) or others (18); and
- a rear reinforcement (23).

As can be seen in figure 3, the base of the machine (21) is encased and attached to the arm of the machine (20) by means of 2 pins or other means (22).

It can be seen in figure 3 that the base of the machine (21) is encased and attached to the base (10) by means of screws.

The hydraulic drive cylinder (3), represented in figure 1, is located inside the outer structure (1) and is connected with one of the ends to the outer structure (1) and with the other end to the three-cutter axe (2) by means of the pivot pin of the cylinder (16) and of the pivot pin (19) .

A three-cutter axe (2), represented in figures 1 and 2, is simultaneously connected to the hydraulic cylinder (3) and to the outer structure (1), respectively by means of the pivot pin (19), which is inserted into the intermediate ring (13), and a pin (17).

The operation of opening and closing the three-cutter axe (2) is carried out by the movement of an alternative hydraulic circuit on the machine (20).

The present invention should only be limited by the scope of the following claims.

## Claims

1. A stump extraction device comprising:
- an outer structure (1);
- a three-cutter axe (2); and
- a hydraulic drive cylinder (3), wherein the outer structure (1) comprises:
- a left cutter (4), a right cutter (5) and a base cutter (6) that are disposed in a U-shape, the base of which is the base cutter (6), and on which the left cutter (4) and the right cutter (5) are perpendicularly attached on each of the respective vertices;
- a base (10), located on top of the outer structure (1) and for the encasement and attachment of the arm of a machine (20);
- two large sides (11), respectively located on the left and right portion of the outer structure (1);
- a rear ring (12);
- an intermediate ring (13), for joining the outer structure (1) and the three-cutter axe (2);
- an extractor (14), located half-way and inside the outer structure (1);
- a left and right outer reinforcement (15), respectively located on the left and right portion of the outer structure (1);
- a pivot pin (16) of the cylinder (3), which is inserted into the rear ring (12);
- a pivot pin (17) of the three-cutter axe (2), which connects the cylinder (3) to the three-cutter axe (2);
- two replaceable lower penetration beaks (18) or others (18); and
- a rear reinforcement (23),
**and** wherein the three-cutter axe (2) is simultaneously connected to the hydraulic cylinder (3) and to the outer structure (1), respectively by means of the pivot pin (19), which is inserted into the intermediate ring (13), and a pin (17).

2. The stump extraction device according to claim n°. 1, **characterised in that** a three-cutter axe (2) comprises:
- an upper left cutter (7);
- an upper right cutter (8); and
- a rear cutter (9), consistent with the cutters of the outer structure (1).

3. The stump extraction device according to claim n°. 1, **characterised in that** the components of the three-cutter axe (2), concretely:
- the upper left cutter (7);
- the upper right cutter (8); and
- the rear cutter (9)
are disposed in a U-shape, the base of which is the rear cutter (9), and on which the upper left cutter (7) and the upper right cutter (8) are perpendicularly attached on each of the respective vertices.

4. The stump extraction device according to claim n°. 1, **characterised in that** a base (21) connected to the machine is encased and attached to the base (10) by means of screws.

5. The stump extraction device according to claim n°. 4, **characterised in that** the base (21) is encased and attached to a arm of the machine (20) by means of 2 pins or other means (22).

6. The stump extraction device according to claim n°. 1, **characterised in that** the hydraulic drive cylinder (3) is:
- located inside the outer structure (1)
**and in that**
- it is connected with one of the ends to the outer structure (1) and with the other end to the three-cutter axe (2) by means of the pivot pin of the cylinder (16) and of the pivot pin (19).

7. The stump extraction device according to claim n°. 1, **characterised in that** the operation of opening and closing the three-cutter axe (2) is carried out by the movement of an alternative hydraulic circuit in the machine (20).

## Patentansprüche

1. Eine Stumpfextraktionsvorrichtung, die folgendes umfasst:
- eine äußere Struktur (1);
- eine Dreischneider-Axt (2); und
- einen hydraulischen Antribeszylinder (3),
worin die äußere Struktur (1) folgendes umfasst:
- ein linkes Schneidemesser (4), ein rechtes Schneidemesser (5) und ein Grundschneidemesser (6), die in einer U-Form angeordnet sind, die Basis dessen ist das Grundschneidemesser (6) und auf welchem das linke Schneidemesser (4) und das rechte Schneidemesser (5) senkrecht an den jeweiligen Eckpunkten befestigt sind;
- eine Grundplatte (10), die oben auf der äußeren Struktur (1) platziert ist, und für die Einspannung und Befestigung des Arms der Maschine (20);
- zwei große Seitenflächen (11), jeweils am linken und rechten Teil der äußeren Struktur (1) platziert;
- einen hinteren Ring (12);
- einen Zwischenring (13), um die äußere Struktur (1) und die Dreischneider-Axt (2) zu verbinden;
- einen Extraktor (14), der halbwegs und im Inneren der äußeren Struktur (1) platziert ist;
- eine linke und eine rechte äußere Verstärkung (15), jeweils an dem linken und rechten Teil der äußeren Struktur (1) platziert;
- einen Drehzapfen (16) des Zylinders (3), der in den hinteren Ring (12) eingeführt wird;
- einen Drehzapfen (17) der Dreischneider-Axt (2), welcher den Zylinder (3) mit der Dreischneider-Axt (2) verbindet;
- zwei austauschbare untere Eindringschnabel (18) oder andere (18); und
- eine hintere Verstärkung (23),
und worin
die Dreischneider-Axt (2) gleichzeitig mit dem hydraulischen Zylinder (3) und mit der äußeren Struktur (1) verbunden ist, jeweils mittels eines Drehzapfen (19), welcher in den Zwischenring (13) eingeführt ist, und einen Zapfen (17).

2. Die Stumpfextraktionsvorrichtung nach Anspruch 1, **dadurch gekennzeichnet, dass** eine Dreischneider-Axt (2) folgendes umfasst:
- ein oberes linkes Schneidemesser (7);
- ein oberes rechtes Schneidemesser (8); und
- ein hinteres Schneidemesser (9), das mit den Schneidemessern der äußeren Struktur (1) übereinstimmt.

3. Die Stumpfextraktionsvorrichtung nach Anspruch 1, **dadurch gekennzeichnet, dass** die Komponenten der Dreischneider-Axt (2), konkret:
- das obere linke Schneidemesser (7);
- das obere rechte Schneidemesser (8); und
- das hintere Schneidemesser (9)
in einer U-Form angeordnet sind, dessen Basis das hintere Schneidemesser (9) ist, und auf welche das obere linke Schneidemesser (7) und das obere rechte Schneidemesser (8) senkrecht an den jeweiligen Eckpunkten befestigt sind.

4. Die Stumpfextraktionsvorrichtung nach Anspruch 1, **dadurch gekennzeichnet, dass** eine Grundplatte (21), die an die Maschine verbunden ist, eingespannt und an die Grundplatte (10) mittels Schrauben befestigt ist.

5. Die Stumpfextraktionsvorrichtung nach Anspruch 4, **dadurch gekennzeichnet, dass** die Grundplatte (21) eingespannt und an einen Arm der Maschine (20) mittels zwei Zapfen oder anderer Mittel (22) befestigt ist.

6. Die Stumpfextraktionsvorrichtung nach Anspruch 1, **dadurch gekennzeichnet, dass** der hydraulische Antribeszylinder (3) :
- im Inneren der äußeren Struktur (1) ist und **dass**
- es mit einem der Enden zu der äußeren Struktur (1) und mit dem anderen Ende zu der Dreischneider-Axt (2) mittels des Drehzapfen (16) des Zylinders und des Drehzapfen (19) verbunden ist.

7. Die Stumpfextraktionsvorrichtung nach Anspruch 1, **dadurch gekennzeichnet, dass** der Öffnungs- und Schließvorgang der Dreischneider-Axt (2) durch die Bewegung eines alternativen Hydraulikkreislaufes in der Maschine (20) ausgeführt wird.

## Revendications

1. Un dispositif d'extraction de souches comprenant :
- une structure extérieure (1) ;
- un dispositif de coupe à trois tranchants (2) ; et
- un cylindre hydraulique d'actionnement (3), dans lequel la structure extérieure (1) comprend :
- un élément coupant gauche (4), un élément coupant droit (5) et un élément coupant de base (6) qui sont disposés en forme de U, dont la base est l'élément coupant de base (6), et où l'élément coupant gauche (4) et l'élément coupant droit (5) sont fixés perpendiculairement sur chacun des sommets respectifs ;
- une base (10), située sur la partie supérieure de la structure extérieure (1), pour l'emboîtement et la fixation du bras d'une machine (20) ;
- deux côtés larges (11), situés respectivement sur la partie gauche et la partie droite de la structure extérieure (1) ;
- un anneau arrière (12) ;
- un anneau intermédiaire (13), pour joindre la structure extérieure (1) et le dispositif de coupe à trois tranchants (2) ;
- un extracteur (14), situé à mi-chemin à l'intérieur de la structure extérieure (1) ;
- renforts extérieurs gauche et droit (15), situés respectivement sur la partie gauche et la partie droite de la structure extérieure (1) ;
- une cheville de pivotement (16) du cylindre (3), qui est insérée dans l'anneau arrière (12) ;
- une cheville de pivotement (17) du dispositif de coupe à trois tranchants (2), qui relie le cylindre (3) au dispositif de coupe à trois tranchants (2) ;
- deux becs inférieurs de pénétration remplaçables (18) ou autres (18) ; et
- un renfort arrière (23),
et dans lequel
le dispositif de coupe à trois tranchants (2) est relié simultanément au cylindre hydraulique (3) et à la structure extérieure (1), au moyen respectivement de la cheville de pivotement (19), qui est insérée dans l'anneau intermédiaire (13), et d'une cheville (17).

2. Le dispositif d'extraction de souches selon la revendication 1, **caractérisé en ce qu'**un dispositif de coupe à trois tranchants (2) comprend :
- un élément coupant gauche supérieur (7) ;
- un élément coupant droit supérieur (8) ; et
- un élément coupant arrière (9), cohérents avec les éléments coupants de la structure extérieure (1).

3. Le dispositif d'extraction de souches selon la revendication 1, **caractérisé en ce que** les composants du dispositif de coupe à trois tranchants (2), à savoir :
- l'élément coupant gauche supérieur (7) ;
- l'élément coupant droit supérieur (8) ; et
- l'élément coupant arrière (9)
sont disposés en forme de U, dont la base est l'élément coupant arrière (9), et où l'élément coupant gauche supérieur (7) et l'élément coupant droit supérieur (8) sont fixés perpendiculairement sur chacun des sommets respectifs.

4. Le dispositif d'extraction de souches selon la revendication 1, **caractérisé en ce qu'**une base (21) reliée à la machine est emboîtée et fixée à la base (10) au moyen de vis.

5. Le dispositif d'extraction de souches selon la revendication 4, **caractérisé en ce que** la base (21) est emboîtée et fixée à un bras de la machine (20) au moyen de deux chevilles ou par autres moyens (22).

6. Le dispositif d'extraction de souches selon la revendication 1, **caractérisé en ce que** le cylindre hydraulique d'entraînement (3) est :
- situé à l'intérieur de la structure extérieure (1)
et **en ce que**
- il est relié par l'une des extrémités à la structure extérieure (1) et par l'autre extrémité au dispositif de coupe à trois tranchants (2) au moyen de la cheville de pivotement (16) du cylindre et de la cheville de pivotement (19).

7. Le dispositif d'extraction de souches selon la revendication 1, **caractérisé en ce que** l'opération d'ouverture et de fermeture du dispositif de coupe à trois tranchants (2) est réalisée par le mouvement d'un circuit hydraulique alternatif dans la machine (20).
